# EUROPEAN PATENT APPLICATION

(11) **EP 4 811 582 A1**
(43) Date of publication of application: **23.09.2026**
(21) Application number: 25164813.5
(22) Date of filing: 19.03.2025
(51) Int. Cl.: H02J 3/00, H02J 3/01

(54) **A STATCOM AND A POWER NETWORK SYSTEM**

(71) Applicant: Hitachi Energy Ltd, 8050 Zürich (CH)
(72) Inventor: Hasler, Jean-Philippe, 72244 Västerås (SE); Heydari, Rasool, 722 26 Västerås (SE); Owens, Andrew J, 72210 Västerås (SE)
(74) Representative: AWA Sweden AB

(57) **Abstract**

There is disclosed herein a STATCOM (20), configured to be connected to an electrical power network system (1) comprising at least one inverter-based resource (3) connected to a transformer (4) by an AC transmission line (5). The transformer is connected to an electrical power network (2). The STATCOM is connected between the AC transmission line and the transformer. The STATCOM comprises a converter (22) and a grid forming control system (10) comprising a virtual admittance controller (12) configured to provide a virtual admittance current (I_{VA}), a voltage flicker balancer controller (14) configured to provide a current reference (I_{ref}) based on a current measured in the electrical power network system, and a current limiting controller (16) configured to provide a voltage reference (V_{ref}) for operating the converter of the STATCOM based on the current reference and the virtual admittance current. The present disclosure further relates to an electrical power network system.

## Description

### Technical field

The present disclosure relates to a static synchronous compensator, STATCOM, configured to be connected to an electrical power network system. The present disclosure further relates to an electrical power network system.

### Background

Harmonic distortion in an electrical power network occurs when electrical devices and systems create irregularities in the voltage and current waveforms. This happens due to non-linear loads and devices, which do not draw electricity in a smooth, sinusoidal manner. Examples include electronic equipment like rectifiers, industrial arc furnaces, and machines with magnetic components such as transformers and rotating AC motors.

One contributor to harmonic distortion is inverter-based resources, such as solar and wind power systems which connect to the electrical power network through long transmission lines. Due to environmental considerations, solar and wind power systems are on the rise resulting in more sources that contribute to harmonic distortion. These systems use voltage source converters, which have non-linear characteristics and can introduce harmonic distortions, especially when transformers and reactors become saturated, such as during startup or energization. As a result, the harmonic distortion can affect power quality and system stability.

Harmonic distortion can lead to resonance instability and malfunctions in system protection, posing risks to grid reliability and performance. One common solution is the use of harmonic filters, which are especially important for inverter-based resources. These filters provide damping of parallel resonances caused by long AC cables and ensure the smooth integration of inverter-based resources into the electrical power network. However, harmonic filters also have some challenges. The harmonic filters must be precisely tuned to target specific harmonic frequencies, and they require damping resistors to prevent unwanted resonances at lower frequencies. These factors make filter design more complex, requiring careful planning to ensure their effectiveness. Therefore, improved devices for damping harmonic distortion are needed.

### Summary

It is therefore an object of the present disclosure to provide a static synchronous compensator STATCOM, which alleviates at least part of the above-mentioned drawbacks. It is for example an object of the present disclosure to provide a STATCOM which provides damping of harmonic distortion from inverter-based resources such as for example wind power systems. Further, it is an object of the present disclosure to provide a STATCOM that is able to address an increased range of frequencies for harmonic distortions. Further, it is an object of the present disclosure to provide an electrical power network.

According to a first aspect of the present disclosure, a STATCOM configured to be connected to an electrical power network system is provided. The electrical power network system comprises at least one inverter-based resource connected to a transformer by an alternating current, AC, transmission line, wherein the transformer is connected to an electrical power network. The STATCOM is connected between the AC transmission line and the transformer. The STATCOM comprises a converter configured to convert power between AC and direct current, DC, and a grid forming control system. The grid forming control system comprises a virtual admittance controller configured to provide a virtual admittance current, a voltage flicker balancer controller configured to provide a current reference based on a current measured in the electrical power network system, and a current limiting controller configured to provide a voltage reference for operating the converter of the STATCOM based on the current reference and the virtual admittance current.

According to a second aspect, an electrical power network system is provided. The power network system comprises at least one inverter-based resource connected to a transformer by an alternating current, AC, transmission line, and a static synchronous compensator, STATCOM according to the first aspect. The transformer is connected to an electrical power network, and the STATCOM is connected between the AC transmission line and the transformer.

Harmonic distortion is a power quality issue that occurs when non-sinusoidal voltage or current waveforms are introduced into an electrical power network system. Preferably, an AC power network system operates at a pure sinusoidal waveform at the fundamental frequency (typically 50 or 60 Hz). However, nonlinear loads and power electronic devices, such as inverters and variable frequency drives, may generate harmonics, i.e., voltage or current components at integer multiples of the fundamental frequency (e.g., 2nd harmonic at 100 Hz, 3rd harmonic at 150 Hz in a 50 Hz system).The growing integration of inverter-based resources, such as wind power systems, along with the widespread use of power electronics, has made harmonic distortion more common in electrical power systems and made the harmonic distortion occur over an increased frequency range. Further, long transmission lines, such as overhead lines and cables, due to the inverter-based resource being located far away, create resonance conditions that may amplify the harmonic distortions. For example, wind power systems are often located far away from the electrical power network.

The STATCOMs are conventionally used for reactive power compensation and voltage regulation. However, the STATCOM may also be used for harmonic mitigation. By providing the STATCOM with the grid forming control system of the present disclosure between the AC transmission line and the transformer, the grid forming control system is able to control the STATCOM such that the harmonic distortion is dampened before the power reaches the electrical power network. In other words, the STATCOM with the grid forming control system may provide the same functionality as filters and damping resistors provide to the electrical power network system in conventional systems. Thus, the STATCOM is able to improve the power quality.

Further, conventional filters have required precise tuning toward specific frequencies and were therefore only able to target specific harmonic frequencies. This results in that the filters are only able to mitigate a small range of frequencies. With the increased number of inverter-based resources and the increased frequency range of harmonic distortion, multiple filters with different tuning have been required, thereby resulting in an increased complexity and increased risk of resonances in the electrical power network system. The provided STATCOM and the grid forming control system are able to provide harmonic damping in a wider frequency range and to provide damping for frequencies outside the common tuning frequencies of the filter. The grid forming control system allows further adjustments to the tuning of the frequency range that the STATCOM are able to provide damping for. For example, the virtual admittance controller and the current limiting controller may be controlled to mitigate pollutions in their input.

The virtual admittance controller is a common part in the grid forming control system in inverter-based converters and is used for emulating the behavior of an admittance in the electrical power network system. Inverter-based converters lack the inherent damping and impedance characteristic of physical machines, such as generators, and the virtual admittance controller is introduced to shape the converter to behave more like traditional generators, thereby smoothening out high-frequency components and reducing harmonics in the virtual admittance current from the input to the virtual admittance controller.

The voltage flicker balancer controller is provided with the current measured in the electrical power network system and processes the current to provide a current reference. This current reference includes information of the quality of the current in the electrical power network system and provides information for the grid forming control system of how the STATCOM should be operated to compensate for the voltage flicker and/or harmonics in the current of the electrical power network system. The current measured in the electrical power network system may for example be measured at a point of common coupling where the transformer connects to the electrical power network.

The current limiting controller is used to provide the voltage reference used for operating the converter. The current limiting controller ensures that the converter is operated within safe operating limits of the converter. This may for example be by limiting an input current based on the current reference and the virtual admittance current to be below a saturation level of the converter.

The electrical power network may be seen as a high voltage electrical power network or a medium voltage electrical power network. High voltage, HV, typically refers to voltages exceeding voltage level for residential and/or commercial use, each of which depends on region of use. As a non-limiting example, the International Electrotechnical Commission, IEC, typically considers AC voltages of 1000 V or more and DC voltages of 1500 V or more to be high voltage.

The measured current may include information about the presence of harmonics in the electrical power network system. Hence, the grid forming control system may be configured to control a virtual impedance of the virtual admittance controller such that the virtual impedance of the STATCOM compensates for harmonics in the high voltage electrical power network.

The virtual impedance of the virtual admittance controller may be controlled such that the virtual impedance of the STATCOM is adapted to dampen the harmonic distortion in the electrical power network system. For example, if conventional harmonics are present in the current measured in the electrical power network system, the virtual impedance of the virtual admittance controller may be controlled to be equal or close to the impedance provided by the filters and reactors in conventional approaches. If other harmonics than the conventional harmonics are present in the measured current, the virtual impedance of the virtual admittance controller may be controlled based on which virtual impedance that best dampen these other harmonics.

The measured current may be configured to be measured in proximity to said at least one inverter-based resource.

In electrical power network systems, it is often possible to identify the sources of harmonics. For example, inverter-based resources, such as solar and wind power systems, are well-known contributors to harmonic distortion. This allows the electrical power network system designers to measure the current close to a source of harmonic distortion, which often is the inverter-based resource. By measuring the current in proximity to the inverter-based resource, the STATCOM may be controlled to dampen the harmonics at which the inverter-based source is contributing to the electrical power network system. As an example, the feeder current from a wind power system may be measured. This provides the STATCOM with a more accurate measurement of the harmonics which has not been affected by other factors in the electrical power network system, for example, the effects that the AC transmission line has on the harmonics. The accurate measurement allows for a quicker response time to the harmonic distortion.

For providing an internal voltage source, the grid forming control system may further comprise an energy controller and at least one of a reactive power controller and a voltage controller. The energy controller may be used to control an active power output of the converter, i.e. regulating the amount of real power supplied to the electrical power network. The voltage controller and/or the reactive power controller may be used to control a voltage output of the converter and also the reactive power exchange between the converter and the electrical power network system.

The energy controller may be configured to provide a phase angle of the internal voltage source. The reactive power controller and/or the voltage controller may be configured to provide a magnitude of the internal voltage source. The internal voltage source refers to the virtual voltage generated within the grid forming control system to provide an internal stiff voltage.

The virtual admittance controller may be configured to provide the virtual admittance current based on the internal voltage source, a measured voltage, and the voltage reference. The measured voltage may for example be measured at the point of common coupling. With input from the internal voltage source information from both the energy controller and the control of reactive power and voltage is provided to the virtual admittance controller. Thereby, the information from the energy controller and the voltage controller/reactive controller is provided to the current limiting controller when determining how the converter is operated.

The current limiting controller may be configured to provide the voltage reference based on the sum of the current reference and the virtual admittance current. The current reference provides information to the current limiting controller of which harmonics that are present in the electrical power network.

The electrical power network system may further comprise at least one reactor and/or filter being connected between the AC transmission line and the transformer via an inductor.

It should be understood that the provided STATCOM may be implemented in electrical power network systems where reactors and filters for harmonic dampening already are installed. The STATCOM with the grid forming control system are able to dampen the parallel resonance, which is the resonance that occurs below the filter tuning frequency. However, the STATCOM with the grid forming control system may also completely replace the need of damping resistor and harmonic filters.

The electrical power network system may further comprise an inductor which connects the STATCOM between the AC transmission line and the transformer. The inductor may be used to help in matching the impedance of the STATCOM to the impedance of the electrical power network system and in reducing the risk (or preferably avoiding) that the STATCOM causes voltage oscillations.

Effects and features of the second aspect may be largely analogous to those described above in connection with the first aspect. Embodiments mentioned in relation to the first aspect may be at least largely compatible with the second aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating in preferred embodiments of the disclosure, are given by way of illustration only, since various changes and modifications within the scope of the disclosure will become apparent to those skilled in the art from this detailed description.

Hence, it is to be understood that the present disclosure is not limited to the particular parts of the STATCOM, and the electrical power network system described herein. It is also to be understood that the terminology used herein is for the purpose of describing particular embodiments only, and it is not intended to be limiting.

### Brief description of the drawings

The above and other aspects of the present disclosure will now be described in more detail, with reference to the appended figures, wherein:
- Fig. 1: schematically shows an overview of an electrical power network system.
- Fig. 2: schematically shows an electrical power network system with optional features.
- Fig. 3: schematically shows a grid forming control scheme for the grid forming control system.

### Detailed description

The present disclosure is described in the following by way of a number of illustrative examples. It will be appreciated that these examples are provided for illustration and explanation only and are not intended to be limiting on the scope of the claims.

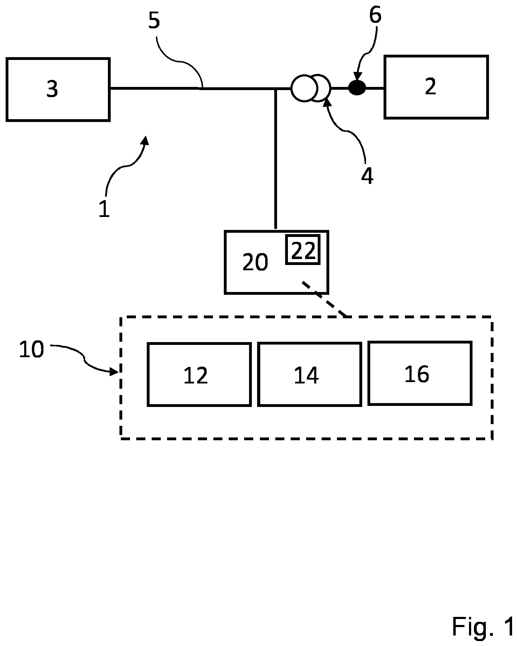

Fig. 1 schematically illustrates an electrical power network system 1. The electrical power network system comprises at least one inverter-based resource 3 connected to a transformer 4 by an alternating current, AC, transmission line 5. The AC transmission line may for example be a transmission cable or an overhead line. The transformer 4 is connected to an electrical power network 2 at a point of common coupling 6. The inverter-based resource 3 may for example be a wind power system which is connected to the electrical power network 2, through the transformer 4 via the AC transmission line 5. Wind power systems are often located far away from the electrical power network 2 and therefore long AC transmission lines 5 are necessary. The combination of power electronics in the inverter-based resource 3, for example wind power system, and long AC transmission lines has made harmonic distortion more common in electrical power network systems and made the harmonic distortion occur over an increased frequency range. Harmonic distortion is a power quality issue that occurs when non-sinusoidal voltage or current waveforms are introduced into an electrical power network system.

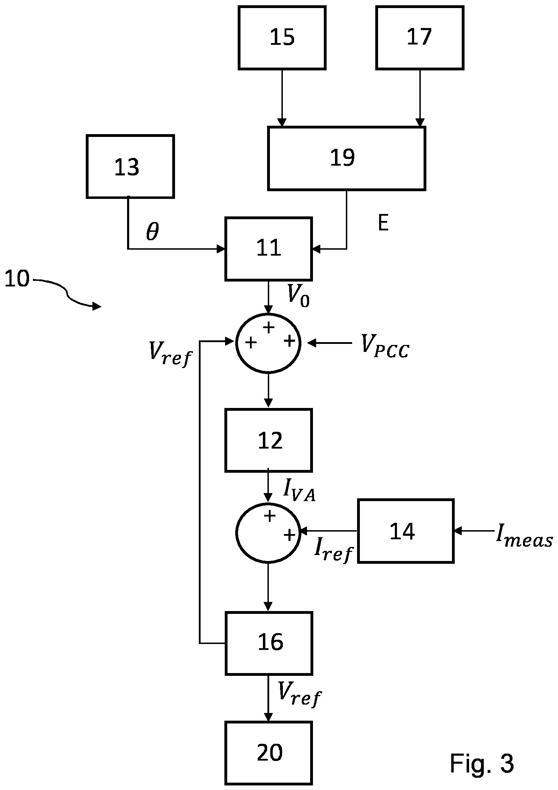

The electrical power network system 1 further comprises a static synchronous compensator, STATCOM 20. The STATCOM 20 is connected to the electrical power network system 1 between the AC transmission line 5 and the transformer 4. The STATCOM may for example be connected to the AC transmission line 5, in proximity to the transformer 4, or to the AC transmission line 5 between the inverter-based resource 3 and the transformer 4. STATCOMs are conventionally used for reactive power compensation and voltage regulation. However, the STATCOM 20 may also be used for harmonic mitigation. By providing the STATCOM 20 with a grid forming control system 10 between the AC transmission line 5 and the transformer 4, the grid forming control system 10 is able to control the STATCOM 20 such that the harmonic distortion is dampened before the power reaches the electrical power network 2. An example of how the grid forming control system 10 may operate is further described in connection to Fig. 3. Further, the positioning of the STATCOM 20 between the transformer 4 and the transmission line 5 may be the same as for filters and damping resistors that conventionally are used for damping harmonic distortion. In other words, the STATCOM 20 with the grid forming control system 10 according to the present disclosure may replace filters and damping resistors.

The STATCOM 20 comprises a converter 22 and the grid forming control system 10. The converter 22 is configured to convert power between AC and direct current, DC. The converter 22 provides the power exchange between the electrical power network system 1 and the STATCOM 20. The grid forming control system 10 comprises a virtual admittance controller 12 configured to provide a virtual admittance current I_{VA}, a voltage flicker balancer controller 14 configured to provide a current reference I_{ref} based on a current Iₘₑₐₛ measured in the electrical power network system 1, and a current limiting controller 16 configured to provide a voltage reference V_{ref} for operating the converter 22 of the STATCOM 20 based on the current reference I_{ref} and the virtual admittance current I_{VA}.

The virtual admittance controller 12 is used for emulating the behavior of an admittance in the electrical power network system 1. Inverter-based converters lack the inherent damping and impedance characteristic of physical machines, such as generators, and the virtual admittance controller 12 is therefore introduced to shape the converter 22 so that it behaves more like traditional generators.

The current limiting controller 16 is configured to limit the current below a saturation level of the power converter 22. The output from the virtual admittance controller 12 does not inherently account for the physical limitations of the converter 22, such as its maximum current-handling capacity. If the grid forming control system 10 demanded too excessive current, it could push the converter 22 beyond its safe operating limits, potentially causing overheating, component damage, or instability. To prevent this, the current limiting controller 16 is provided to cap the output current within a safe range, protecting the converter 22 while maintaining effective control. Therefore, the current limiting controller 16 is used to provide the voltage reference V_{ref} which is used for operating the converter 22.

The voltage flicker balancer controller 14 is provided with the current Iₘₑₐₛ measured in the electrical power network system 1 and processes the current to provide a current reference I_{ref}. This current reference includes information of the quality of the current, for example presence of harmonics, in the electrical power network system and provides information for the grid forming control system of how the STATCOM 20 should be operated to compensate for the voltage flicker and/or harmonics in the current of the electrical power network system 1.

The measured current Iₘₑₐₛ may be measured in proximity to said at least one inverter-based resource 3. Inverter-based resources, such as solar and wind power systems, are well-known contributors to harmonic distortion. By measuring the current Iₘₑₐₛ in proximity to the inverter-based resource 3, the STATCOM 20 may be controlled to dampen the harmonics at which the inverter-based source 3 is contributing to the electrical power network system 1.

To compensate for the harmonics, a virtual impedance of the virtual admittance controller 12 may be controlled such that the virtual impedance of the STATCOM 20 is adapted to dampen the harmonic distortion in the electrical power network system 1. For example, if conventional harmonics is present in the current measured in the electrical power network system 1, the virtual impedance of the virtual admittance controller 12 may be controlled to be equal or close to the impedance provided by the filters and reactors in conventional approaches. If other harmonics than the conventional harmonics are present in the measured current, the virtual impedance of the virtual admittance controller may be controlled based on which virtual impedance that best dampen these other harmonics.

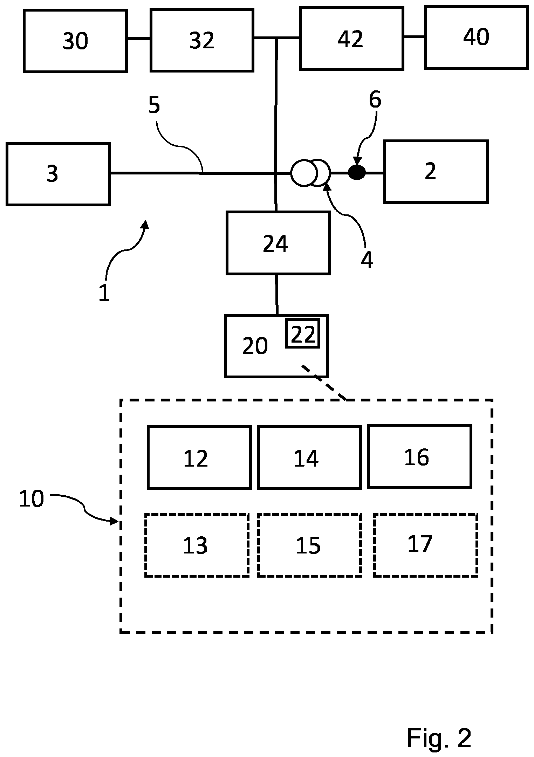

Fig. 2 schematically illustrates an electrical power network system 1 where the STATCOM 20 has been implemented in an already existing electrical power network system where at least one reactor 30 and at least one filter 40 are already connected to the electrical power network system 1 via a respective inductor 32, 42. In this case the STATCOM 20 with the grid forming control system 10 may be installed as a complement to the already existing reactors 30 and filters 40.

In this embodiment, the electrical power network system 1 further comprises an inductor 24 which connects the STATCOM 20 between the AC transmission line 5 and the transformer 4. The inductor 24 may be used to provide matching of the impedance of the STATCOM 20 to the impedance of the electrical power network system 1 and to avoid that the STATCOM 20 causes voltage oscillations, or at least reduce the risk of such voltage oscillations.

In Fig. 2, a few optional features of the grid forming control system 10 are illustrated in dotted boxes.

For providing an internal voltage source V₀, the grid forming control system may further comprise an energy controller 13 and at least one of a reactive power controller 15 and a voltage controller 17. The energy controller 13 is used to control an active power output of the converter 22, i.e. regulating the amount of real power supplied to the electrical power network system 1. The voltage controller 15 and/or the reactive power controller 17 may be used to control a voltage output of the converter 22 and also the reactive power exchange between the converter 22 and the electrical power network system 1. The internal voltage source V₀ refers to the virtual voltage generated within the grid forming control system 10 before it interacts with the external electrical power network or a load. It represents the fundamental voltage that the converter 22 aims to maintain.

In Fig. 3 an example of the grid forming control system 10 is described. The energy controller 13 manages the active power of the converter 22 and provides a phase angle θ of the internal voltage source V₀. The reactive power controller 15 and/or the voltage controller 17 provide a magnitude E of the internal voltage source V₀. An integrator 19 may be used either to combine the outputs of the reactive power controller 15 and the voltage controller 17 or to switch between the two controllers 15, 17 to obtain the magnitude E of the internal voltage source V₀. The internal voltage source V₀ is obtained by combining the magnitude E and the phase angle θ in a controller 11.

The internal voltage source V₀ may thereafter be summed together with a measured voltage V_{PCC}, and the voltage reference V_{ref} to be used as an input to the virtual admittance controller 12. The measured voltage V_{PCC} may for example be measured at the point of common coupling 6. If harmonics are detected in the measure voltage, the grid forming control system 10 may adapt the virtual impedance of the virtual admittance controller 12 to dampen the harmonic distortion in the electrical power network system 1. The virtual admittance controller 12 outputs the virtual admittance current I_{VA}.

The voltage flicker controller 14 is provided with the measured current Iₘₑₐₛ as an input, as discussed above. The voltage flicker balancer controller 14 processes the current Iₘₑₐₛ, by providing proper damping or current reference adjustments to dampen the harmonics or flicker, to provide the current reference I_{ref}. This provides information to the grid forming control system of how it should adapt to the harmonics that are present in for example a current measured in proximity to the inverter-based resource 3. The current reference I_{ref} and the virtual admittance current I_{VA} are summed as an input to the current limiting controller 16 which limits the input and processes the input to provide the voltage reference V_{ref} used to control the converter 20.

While the present disclosure is susceptible to various modifications and alternative forms, specific examples are shown and described in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims, including the possible combination of various elements of these specific examples.

## Claims

1. A static synchronous compensator, STATCOM (20), configured to be connected to an electrical power network system (1) comprising at least one inverter-based resource (3) connected to a transformer (4) by an alternating current, AC, transmission line (5), wherein the transformer is connected to an electrical power network (2), the STATCOM being connected between the AC transmission line and the transformer, the STATCOM comprising:
a converter (22) configured to convert power between AC and direct current, DC, and
a grid forming control system (10) comprising a virtual admittance controller (12) configured to provide a virtual admittance current (I_{VA}), a voltage flicker balancer controller (14) configured to provide a current reference (I_{ref}) based on a current (Iₘₑₐₛ) measured in the electrical power network system, and a current limiting controller (16) configured to provide a voltage reference (V_{ref}) for operating the converter of the STATCOM based on the current reference and the virtual admittance current.

2. The STATCOM according to claim 1, wherein the grid forming control system is configured to control a virtual impedance of the virtual admittance controller such that the virtual impedance of the STATCOM compensates for harmonics in the high voltage electrical power network.

3. The STATCOM according to any one of the preceding claims, wherein the measured current is configured to be measured in proximity to said at least one inverter-based resource.

4. The STATCOM according to any one of the preceding claims, wherein, for providing an internal voltage source (V₀), the grid forming control system further comprises an energy controller (13) and at least one of a reactive power controller (15) and a voltage controller (17).

5. The STATCOM according to claim 4, wherein the energy controller is configured to provide a phase angle (θ) of the internal voltage source.

6. The STATCOM according to claim 4 or 5, wherein at least one of the reactive power controller and the voltage controller is configured to provide a magnitude (E) of the internal voltage source.

7. The STATCOM according any one of claims 4 to 6, wherein the virtual admittance controller is configured to provide the virtual admittance current based on the internal voltage source, a measured voltage (V_{PCC}), and the voltage reference.

8. The STATCOM according to any one of the preceding claims, wherein the current limiting controller is configured to provide the voltage reference based on the sum of the current reference and the virtual admittance current.

9. An electrical power network system (1) comprising at least one inverter-based resource (3) connected to a transformer (4) by an alternating current, AC, transmission line, (5) and a static synchronous compensator, STATCOM (20) according to any one of the preceding claims,
wherein the transformer is connected to an electrical power network (2), and the STATCOM is connected between the AC transmission line and the transformer.

10. The electrical power network system according to claim 9, further comprising at least one reactor (30) and/or at least one filter (40), each being connected between the AC transmission line and the transformer via an inductor (32, 42).

11. The electrical power network system according to claim 9 or 10, further comprising an inductor (24) which connects the STATCOM between the AC transmission line and the transformer.
